# EUROPEAN PATENT SPECIFICATION

(11) **EP 0 385 254 B1**
(45) Date of publication and mention of the grant of the patent: **14.06.1995**
(21) Application number: 90103353.0
(22) Date of filing: 21.02.1990
(51) Int. Cl.: H02K 41/02

(54) **Air gap device for toroidal linear motor**
Luftspalteinrichtung für linearen Ringmotor
Dispositif d'entrefer pour moteur linéaire toroidal

(30) Priority: 28.02.1989 JP 49722/89
(43) Date of publication of application: 05.09.1990
(73) Proprietor: OTIS ELEVATOR COMPANY, Farmington, CT 06032 (US)
(72) Inventor: Nakai, Keiichiro, Tokyo (JP); Nakanishi, Yoshinori, Sungu-Gun, Chiba Prefecture (JP)
(74) Representative: Klunker . Schmitt-Nilson . Hirsch

(56) References cited:
- US-A- 2 640 955
- US-A- 4 215 283
- PATENT ABSTRACTS OF JAPAN vol. 5, no. 141 (E-73)(813) 05 September 1981 ; & JP-A-56 074082
- PATENT ABSTRACTS OF JAPAN vol. 8, no. 161 (E-257)(1598) 26 July 1984 ; & JP-A-59 059063

## Description

The invention relates to a toroidal type linear motor, comprising:
(a) a moving element having a cylindrical through opening and a stationary element extending through the through opening,
(b) the linear motor providing magnetic forces adapted to maintain a predetermined annular air gap between the moving and stationary elements, when the moving element is in motion;
(c) and a supporting member fixed to the moving element and adapted to prevent contact between the surface of the through opening and the stationary element, when magnetic forces strong enough to maintain the predetermined annular air gap are not present.

An elevator driven by such a linear motor is known.

Typically, a vertically extending column fixed to a building is used as the stationary element and the moving element is incorporated in a counterweight unit to move vertically along the column. Sheaves are rotatably fixed to the upper portion of the building. Ropes which connect the counterweight unit and an elevator car are guided by the sheaves. While the elevator car moves upwardly and downwardly, substantially even magnetic forces between the column and the moving element maintain a predetermined air gap therebetween. However, when the elevator car is stopped, no magnetic force is exerted between the column and the moving element, so that the air gap may not be maintained. In addition, when an impact or vibration is applied to the column, the air gap may not be maintained. Therefore, in some of conventional elevators driven by a toroidal type linear motor, a plurality of rollers are rotatably fixed to the top and bottom surfaces of the moving element, and these rollers rotate and move on the column so as to maintain the predetermined air gap.

However, with such elevators, rotation of the rollers tends to cause noise as the car moves. In particular, since a column normally is formed of a plurality of connected sections, noise occurs as the rollers pass over the connecting joints of the column. Such noise may cause discomfort to elevator occupants.

It is therefore and object of the invention to provide a toroidal type linear motor, with which an air gap between the moving element and the stationary element is maintained, while noise is decreased as the moving element moves upwardly and downwardly.

The toroidal type linear motor according to the invention is characterized in that
(d) the supporting member is spaced from the stationary element as long as the predetermined annular air gap exists;
(e) and the supporting member is spaced from the stationary element a distance less than the distance between the surface of the through opening and the stationary element.

The supporting member may comprise a plurality of rollers which are rotatably provided on the top and the bottom of the moving element. Alternatively, the supporting member may comprise annular members fixed to the top and bottom surfaces of the moving element.

When even magnetic force is exerted between the moving and stationary elements, the predetermined annular air gap is usually maintained therebetween, so that the supporting member is not brought into contact with the stationary element at all, whereby no noise occurs due to contact of the supporting member with the stationary element. When uneven or no magnetic force is exerted between the moving and stationary elements, or when an impact or vibration is applied to the stationary element, the supporting member may come into contact with the stationary element to prevent the air gap from decreasing below a predetermined value.

The invention further relates to an elevator comprising an elevator car and a counterweight unit both suspended by ropes which are guided by sheaves arranged in the upper part of a building, the elevator comprising a toroidal type linear motor for driving the counterweight unit and, by means of the ropes, the elevator car, the linear motor being designed as described herein.

Preferred embodiments of the invention will now be described, referring to the drawings.
- Fig. 1: is a schematic perspective view of an elevator driven by a linear motor according to the invention;
- Fig. 2: is a view illustrating a first preferred embodiment of the linear motor used with the elevator of Fig. 1;
- Fig. 3: is a sectional view taken along 3-3 of Fig. 2;
- Fig. 4: is a view illustrating a second preferred embodiment of the linear motor used with the elevator of Fig. 1; and
- Fig. 5: is a sectional view taken along the line 5-5 of Fig. 4.

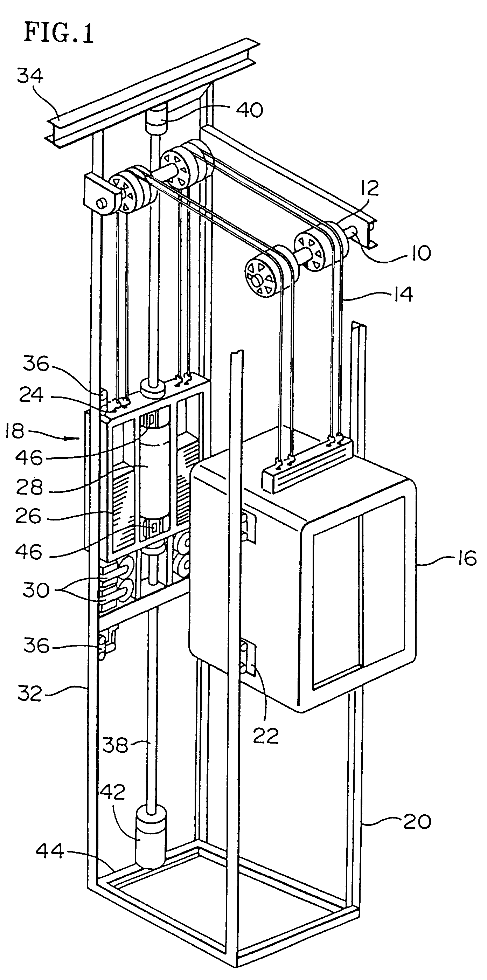

Fig. 1 schematically illustrates an elevator driven by a linear motor. As shown in Fig. 1, a pair of supporting shafts 10 are arranged on the upper portion of a building and extend in parallel to each other at a predetermined distance. Each of the supporting shafts 10 is provided with a pair of sheaves 12 which are arranged in parallel to each other and which are rotatably mounted on the supporting shaft 10. Four ropes 14 are guided by the sheaves 12. One end of each of the ropes 14 is connected to an elevator car 16, and the other end thereof is connected to a counterweight unit 18. When the elevator car 16 moves upwardly, the counterweight unit 18 moves downwardly, and when the elevator car 16 moves downwardly, the counterweight unit 18 moves upwardly.

A pair of vertical rails 20 are fixed to the building on either side of the elevator in parallel to each other. The elevator car 16 is guided along the guide rails 20 via sliding members 22 or rollers provided on the side walls of the elevator car 16.

The counterweight unit 18 comprises a rectangular frame 24 and weights 26 supported on the frame 24. A moving element 28 and a braking device 30 are also supported on the frame 24. The total weight of the counterweight unit 18 including these parts is usually set to be 1.5 times the weight of the elevator car 16.

A pair of vertical guide rails 32 are disposed in parallel to each other on both sides of the counterweight unit 18. The top ends of the guide rails 32 are fixed to the building by means of a top supporting beam 34, and the bottom ends thereof are fixed to the building. Sliding members 36 or rollers are provided on two sides of the counterweight unit 18 to guide it along the guide rails 32.

A toroidal type linear motor which serves as a drive means for the elevator comprises an aluminum alloy column (stationary element) 38 serving as a secondary conductor, and the toroidal moving element 28 serving as a primary conductor.

The column 38 extends vertically. The top end of the column 38 is fixed to the top supporting beam 34 via a column supporting member 40. The bottom end of the column 38 is fixed to the building via a column supporting member 42 and a bottom support beam 44.

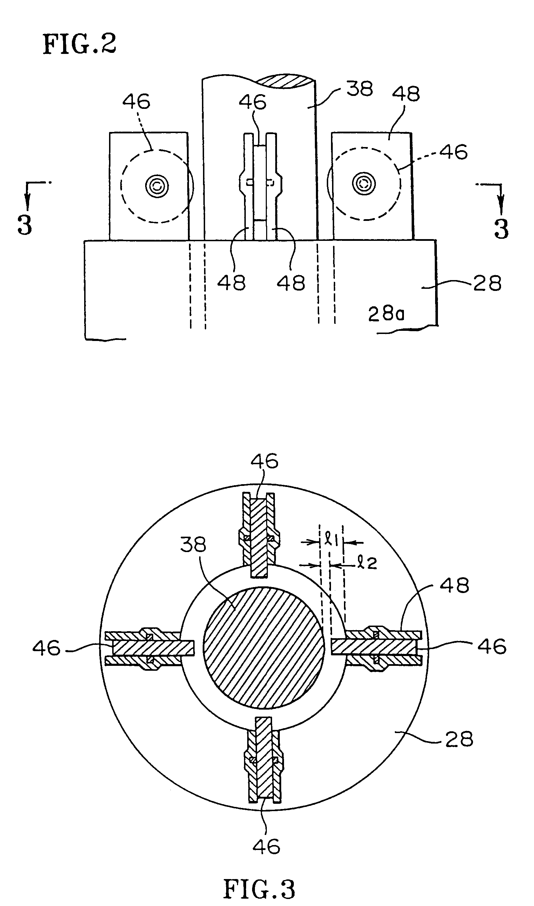

The moving element 28 has a cylindrical through opening 28a which extends in the direction of the axis of the moving element 28 and receives the column 38 therein. As is well known in toroidal type linear motors, a predetermined annular air gap is formed between the stationary and moving elements due to magnetic force produced therebetween. As shown in Figs. 2 through 5, the moving element 28 is designed to move vertically while maintaining a predetermined air gap l1 between the outer surface of the column 38 and the inner surface of the through opening 28a of the moving element 28.

When a substantially even magnetic force is not exerted between the column 38 and the moving element 28 or when an impact or vibration is applied to the column 38, the moving element 28 may not be parallel to the column 38, so that the predetermined air gap may not be maintained. In order to maintain the predetermined air gap, four rollers 46 are provided on each of the top and bottom of the moving element 28.

According to the first embodiment of the invention, the rollers 46 are rotatably supported each between a pair of supporting plates 48 which project from the top and bottom surfaces of the moving element 28. The rollers 46 are arranged such that they are separated from the column 38 by a predetermined distance l2. Therefore, when the air gap between the moving element 28 and the column 38 is decreased, the rollers 46 come into contact with the column 38 so as to prevent the air gap from becoming less than the distance l1-l2. In addition, since the rollers 46 are separated from the column 38 by the predetermined distance l2 when even magnetic force is exerted between the moving element 28 and the column 38, it is possible to decrease noise produced by rotation of the rollers 46 as compared with the conventional linear motor in which the rollers 46 are permanently in contact with the column 38.

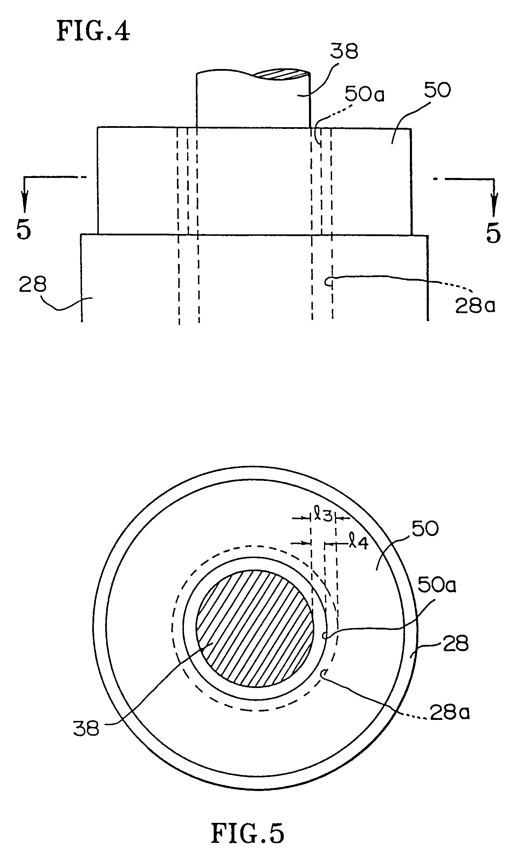

Referring to Figs. 4 and 5, in the second embodiment an annular member 50 is substituted for the rollers 46. The inner diameter of the through opening 50a of the annular member 50 is greater than the outer diameter of the column 38, and is less than the inner diameter of the through opening 28a of the moving element 28.

As set forth above, since the rollers 46 fixed to the moving element 28 are arranged separated from the column 38 by a predetermined distance when there is a predetermined annular air gap between the moving element 28 and the column 38, the rollers 46 do not always rotate and move on the column 38 while the elevator car 16 moves upwardly and downwardly. Therefore, it is possible to prevent noise produced by rotation of the rollers 46 and to prevent the air gap from decreasing below a predetermined value. In the case where the annular member 50 is substituted for the rollers 46, the inner diameter of the through opening 50a of the annular member 50 is greater than the outer diameter of the column 38 and is less than inner diameter of the through opening 28a of the moving element 28. Therefore, the annular member 50 does not come into contact with the column 38 at all while even magnetic force is exerted between the moving element 28 and the column 38. Accordingly, noise is prevented while preventing the air gap from decreasing below a predetermined value.

## Claims

1. A toroidal type linear motor, comprising:
(a) a moving element (28) having a cylindrical through opening and a stationary element (38) extending through the through opening (28),
(b) the linear motor providing magnetic forces adapted to maintain a predetermined annular air gap (*l*1 ;*l*3) between the moving and stationary elements (28,38), when the moving element (28) is in motion;
(c) and a supporting member (46;50) fixed to the moving element (28) and adapted to prevent contact between the surface (28a) of the through opening and the stationary element (38), when magnetic forces strong enough to maintain the predetermined annular air gap (*l*1;*l*3) are not present,
**characterized in that**
(d) the supporting member is spaced from the stationary element (38) as long as the predetermined annular air gap exists;
(e) and the supporting member (46;50) is spaced from the stationary element (38) a distance (*l*2;*l*4) less than the distance (*l*1;*l*3) between the surface (28a) of the through opening and the stationary element (38).

2. The linear motor of claim 1,
**characterized in that**
the supporting member comprises a plurality of rotatable rollers (46) provided at both ends of the moving element (28).

3. The linear motor of claim 2,
**characterized in that**
angularly spaced rollers (46) are provided at both ends of the moving element (28).

4. The linear motor of claim 1,
**characterized in that**
the supporting member comprises annular members (50) provided at both ends of the moving element (28).

5. An elevator comprising an elevator car (16) and a counterweight unit (18) both suspended by ropes (14) which are guided by sheaves (12) arranged in the upper part of a building, the elevator comprising a toroidal type linear motor for driving the counterweight unit (18) and, by means of the ropes (14), the elevator car (16),
**characterized in that**
the linear motor is designed as set forth in any one of claims 1 to 4.

## Patentansprüche

1. Linearmotor vom Toroidtyp, aufweisend:
(a) ein bewegbares Element (28) mit einer zylindrischen Durchgangsöffnung und ein stationäres Element (38), das sich durch die Durchgangsöffnung (28) erstreckt,
(b) wobei der Linearmotor, wenn das bewegbare Element (28) in Bewegung ist, Magnetkräfte liefert zum Aufrechterhalten eines vorbestimmten, ringförmigen Luftspalts (l1; l3) zwischen dem bewegbaren und dem stationären Element (28, 38);
(c) und ein Abstützteil (46; 50), das an dem bewegbaren Element (28) befestigt ist und Berührung zwischen der Oberfläche (28a) der Durchgangsöffnung und dem stationären Element (38) verhindern soll, wenn Magnetkräfte, die für Aufrechterhaltung des vorbestimmten, ringförmigen Luftspalts (l1; l3) stark genug sind, nicht vorhanden sind,
**dadurch gekennzeichnet**,
(d) daß das Abstützteil von dem stationären Element (38) beabstandet ist, solange der vorbestimmte, ringförmige Luftspalt besteht;
(e) und daß das Abstützteil (46; 50) von dem stationären Element (38) mit einer Distanz (l2; l4) beabstandet ist, die kleiner ist als die Distanz (l1; l3) zwischen der Oberfläche (28a) der Durchgangsöffnung und dem stationären Element (38).

2. Linearmotor nach Anspruch 1,
**dadurch gekennzeichnet**,
daß das Abstützteil mehrere drehbare Rollen (46) aufweist, die an beiden Enden des bewegbaren Elements (28) vorgesehen sind.

3. Linearmotor nach Anspruch 2,
**dadurch gekennzeichnet**,
daß winkelmäßig beabstandete Rollen (46) an beiden Enden des bewegbaren Elements (28) vorgesehen sind.

4. Linearmotor nach Anspruch 1,
**dadurch gekennzeichnet**,
daß das Abstützteil ringförmige Teile (50) aufweist, die an beiden Enden des bewegbaren Elements (28) vorgesehen sind.

5. Aufzug, der eine Aufzugskabine (16) und eine Gegengewichtseinheit (18) aufweist, die beide an Seilen (14) hängen, die über in dem oberen Bereich eines Gebäudes angeordnete Seilscheiben (12) geführt sind, wobei der Aufzug einen Linearmotor vom Toroidtyp zum Antreiben der Gegengewichtseinheit (18) und, über die Seile (14), der Aufzugskabine (16) aufweist,
**dadurch gekennzeichnet**,
daß der Linearmotor so ausgebildet ist, wie in einem der Ansprüche 1 bis 4 angegeben.

## Revendications

1. Moteur linéaire du type toroïdal comprenant :
(a) un élément mobile (28) traversé par une ouverture cylindrique, un élément fixe (38) traversant l'ouverture (28) ;
(b) le moteur linéaire créant des forces magnétiques conçues pour maintenir un entrefer annulaire prédéterminé (l1 ; l3) entre les éléments mobile et fixe (28, 38), quand l'élément mobile (28) se déplace ;
(c) et un élément support (46 ; 50) fixé à l'élément mobile (28) et conçu pour empêcher le contact entre la surface (28a) de l'ouverture traversante et l'élément fixe (38), lorsque des forces magnétiques suffisamment intenses pour maintenir l'entrefer annulaire prédéterminé (l1, l3) ne sont pas présentes,
caractérisé en ce que :
(d) l'élément support est écarté de l'elément fixe (38) dans la mesure où l'entrefer annulaire prédéterminé existe ;
(e) et l'élément support (46 ; 50) est éloigné de l'élement fixe (38) d'une distance (l2 ; l 4) inférieure à la distance (l1 ; l3) entre la surface (28a) de l'ouverture traversante et l'élément fixe (38).

2. Moteur linéaire selon la revendication 1, caractérisé en ce que l'élément support comporte une pluralité de galets rotatifs (46) montés aux deux extrémités de l'élément mobile (28).

3. Moteur linéaire selon la revendication 2, caractérisé en ce que des galets (46) espacés dans la direction angulaire sont montés aux deux extrémités de l'élément mobile (28).

4. Moteur linéaire selon la revendication 1, caractérisé en ce que l'élément support comprend des éléments annulaires (50) montés aux deux extrémités de l'élément mobile (28).

5. Ascenseur comprenant une cabine d'ascenseur (16) et un contrepoids (18), tous deux suspendus par des câbles (14) qui sont guidés par des poulies (12) installées dans la partie supérieure d'un bâtiment, l'ascenseur comprenant un moteur linéaire du type toroïdal, pour entraîner le contrepoids (18) et, au moyen des câbles (14), la cabine d'ascenseur (16), caractérisé en ce que le moteur linéaire est construit comme décrit dans l'une quelconque des revendications 1 à 4.
